# EUROPEAN PATENT SPECIFICATION

(11) **EP 0 909 670 B1**
(45) Date of publication and mention of the grant of the patent: **21.05.2003**
(21) Application number: 98203392.0
(22) Date of filing: 09.10.1998
(51) Int. Cl.: B60K 17/04

(54) **Power train assembly**
Antriebsstranganordnung
Ensemble de train d'entraînement

(30) Priority: 16.10.1997 GB 9721970; 15.07.1998 GB 9815241
(43) Date of publication of application: 21.04.1999
(73) Proprietor: MSD Special Vehicle Engineering Limited, Milton Keynes, Buckinghamshire MK15 8HF (GB); Xtrac Transmissions Limited, Thatcham, Berkshire RG19 4ZA (GB)
(72) Inventor: Whitehead, David Graham, Cranfield, Beds MK43 0EB (GB); Endean, Michael Bruce, St Pierre Dubois, Guernsey CY7 9EY (GB)
(74) Representative: Raynor, Simon Mark

(56) References cited:
- EP-A- 0 439 761
- DE-A- 3 925 409
- FR-A- 2 703 635
- US-A- 1 991 575
- US-A- 2 256 601

## Description

The present invention relates to a power train assembly for a vehicle and in particular, but not exclusively, to a power train assembly for a high performance car such as a rally car.

The layout of a vehicle's power train is restricted by the physical dimensions of the vehicle (including the size of the engine compartment and the transmission tunnel) and, in the case of a competition car, by the regulations laid down by the governing authorities. These restrictions have implications for the size and layout of the power train, including the engine and the gearbox.

Traditionally, the layout of the power train has been either entirely longitudinal, the engine crankshaft and the drive shafts in the gearbox being substantially parallel to the fore-aft axis of the vehicle, or entirely transverse, the crankshaft and the gearbox drive shafts being substantially perpendicular to the vehicle's fore-aft axis. In longitudinal arrangements, the engine usually overhangs the front axle by a considerable distance, which results in poor weight distribution. In transverse arrangements, on the other hand, both the engine and gearbox assembly have to be accommodated entirely within the engine compartment, which limits the choice of engine size.

An alternative arrangement, known as a "T-drive" power train, is described in European Patent Application No. 0439761 A1. In this arrangement, the engine is mounted in a transverse or "east-west" position (with the crankshaft perpendicular to the fore-aft axis) and the gearbox has a longitudinal or "north-south" orientation, the gearbox shafts being parallel to the fore-aft axis. Drive is transmitted from the engine into the gearbox by a bevel gear mounted centrally on the crankshaft, which drives the turbine input shaft of a centrally mounted torque converter. The arrangement is complicated and requires a specially designed engine. Conventional engines cannot readily be adapted to make use of the arrangement.

DE3925409 that forms the closest prior art according to the preamble of claim 1 describes a drive system for a vehicle that includes a transversely mounted engine and a gearbox that is mounted at an acute angle to the longitudinal axis of the vehicle. Drive is transmitted from the engine through a clutch, a drive shaft and a bevel gear into the gearbox, which transmits the drive to a differential. The transmission system has an L-shaped configuration, resulting in inefficient use of space and poor weight distribution.

FR2703635 describes a four wheel drive vehicle having a transversely mounted engine and a longitudinally mounted gearbox that is driven from the engine by a longitudinally mounted gearbox that is driven from the engine by a longitudinal shaft. A transfer box transmits the drive from the gearbox to the wheel axles. The transmission system again has an L-shaped arrangement, resulting in inefficient use of space and poor weight distribution.

It is an object of the present invention to provide a power train assembly that mitigates at least some of the aforementioned disadvantage. Further preferred, but not essential, objects of the invention are to provide a power train assembly that provides further improved packaging and weight distribution and improved access to components requiring regular maintenance, such as the clutch, as well as other improvements generally.

According to the present invention there is provided a power train assembly for a vehicle including a transversely mounted motor, a longitudinally mounted gearbox and a drive transfer unit for transferring drive from the motor to the gearbox, the drive transfer unit being connected to a first end of the engine crankshaft and including transverse transfer means for transferring drive transversely inwards from the first end of the engine crankshaft towards the centre line of the vehicle and re-direction means for re-directing the drive from the transverse direction of the engine to the longitudinal direction of the gearbox; characterised in that the transverse transfer means is constructed and arranged to transfer the drive transversely inwards from the first end of the engine crankshaft towards a second end of the crankshaft, opposite the first end thereof.

The combination of a transverse engine with a longitudinal gearbox makes very efficient use of the space in the engine compartment and the transmission tunnel, increasing the choice of engine size. Because drive is taken from the end of the crankshaft, conventional engines may be used with no significant adaptation. The arrangement provides very good weight distribution.

The transverse transfer means may include a transverse transfer shaft, a transverse transfer sleeve and/or at least one transverse transfer gear.

The re-direction means may include a pair of bevel gears.

The power train assembly may include longitudinal transfer means for transferring drive longitudinally rearwards from the engine to the gearbox. The longitudinal transfer means may include a longitudinal transfer shaft and/or at least one longitudinal transfer gear.

The drive transfer unit may include a clutch. The clutch may include drive input means and drive output means, said drive input means and drive output means being provided on the same side of the clutch. This arrangement allows the clutch to be changed easily, without having to remove the engine or the gearbox.

The vehicle may be a four-wheel drive car.

Embodiments of the present invention will now be described, by way of example, with reference to the accompanying drawings, of which:
Fig. 1 is a plan view of a four wheel drive car, showing the overall layout of the power train assembly according to a first embodiment of the invention;
Fig. 2 is a schematic plan view of a power train assembly according to a second embodiment of the invention;
Fig. 3 is a schematic plan view of a power train assembly according to a third embodiment of the invention;
Fig. 4 is a schematic side view of the power train assembly shown in Fig. 3, and
Fig. 5 is a schematic plan view of a power train assembly according to a fourth embodiment of the invention.

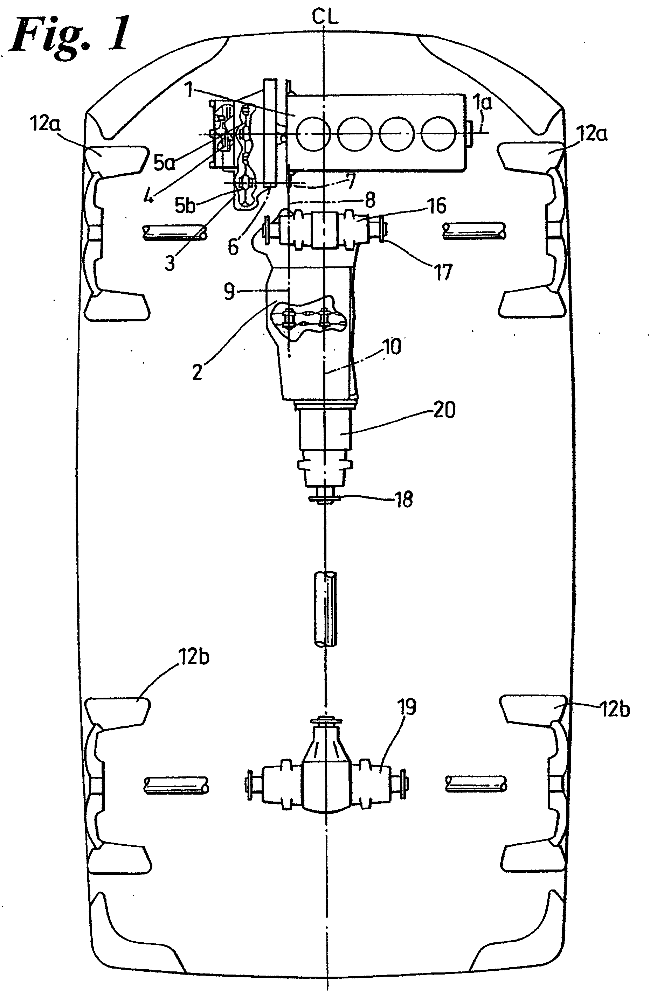

Referring to Fig. 1, a land vehicle, for example a car, has a front-mounted engine 1 arranged transversely (i.e. east-west) in the engine compartment, the rotational axis 1a of the engine crankshaft being perpendicular to the vehicle's fore-aft centre line CL. A gearbox 2 is mounted longitudinally (i.e. north-south) in the transmission tunnel behind the engine 1, its gear shafts being substantially parallel to the vehicle's longitudinal centre line CL.

A transfer unit 3, containing a clutch 4 and two spur gears 5a,5b, is mounted on one end of the engine crankcase. The engine crankshaft 1a is connected to the input shaft of the clutch 4 and the clutch cage is connected to the first spur gear 5a. The second spur gear 5b meshes with the first spur gear 5a and is mounted behind it. The two spur gears 5a,5b serve as transfer gears for transferring drive rearwards to a point behind the crankcase of the engine 1.

The second transfer gear 5b is mounted on a transverse transfer shaft 6 (represented by a broken line) that extends inwards towards the centre line of the car. The inner end of the transverse transfer shaft 6 is connected to the first of a pair of bevel gears 7 (not shown in Fig. 1), the second bevel gear being connected via a longitudinal transfer shaft 8 (represented by a broken line) to the input shaft 9 of the gearbox 2. The bevel gears serve as re-direction means for re-directing the drive from the transverse direction of the engine to the longitudinal direction of the gearbox.

The gearbox 2 is conventional and includes an output shaft 10 that is connected to the front wheels 12a via a front differential 16 and drive output flanges 17, and to the rear wheels 12b via a flange 18 and a rear mounted differential 19. A differential/torque splitter 20 is provided in the drive train to the rear wheels 12b, to control the power distribution to the front and rear wheels.

Drive is transmitted from the crankshaft of the engine 1 to the clutch 4 and then via the transfer gears 5, the transverse transfer shaft 6, the bevel gears 7 and the longitudinal transfer shaft 8 to the input shaft 9 of the gearbox 2. Drive is transmitted from the gearbox 2 to the front and rear wheels or alternatively, in the case of a two-wheel drive car, to either the front wheels or the rear wheels only.

The power train from the engine 1 to the gearbox 2 forms a "G" configuration and will be referred to hereafter as a "G drive".

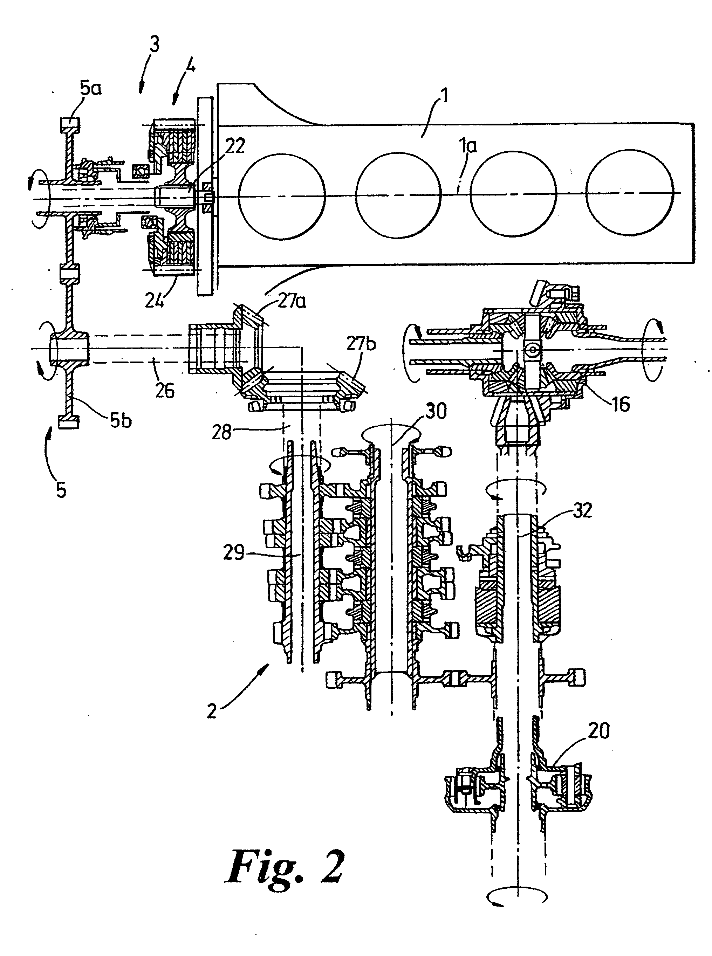

A second embodiment of the power train assembly is shown in Fig. 2. The engine 1 is mounted transversely with the crankshaft 1a perpendicular to the fore-aft axis of the vehicle. A transfer unit 3 that contains a clutch 4 and a pair of transfer gears 5a,5b is mounted on the flywheel end of the engine crankcase. The engine crankshaft 1a is connected to the input shaft 22 of the clutch 4 and the clutch cage 24 is connected to the first transfer gear 5a. The second transfer gear 5b meshes with the first gear 5a and is mounted behind it, so transferring drive rearwards to a point behind the crankcase of the engine 1.

The second transfer gear 5b is mounted on a transverse transfer shaft 26 (shown in broken lines) that extends inwards towards the centre line of the car. The inner end of the transverse transfer shaft 26, is connected to the first of a pair of bevel gears 27a,27b, the second bevel gear 27b being connected via a longitudinal transfer shaft 28 (shown in broken lines) to the input shaft 29 (the layshaft) of the gearbox 2.

The input shaft 29 of the gearbox 2 engages the main shaft 30, which in turn engages the propeller shaft 32 of the vehicle. In the drawing, the input shaft 29, the main shaft 30 and the propeller shaft 32 are shown side-by-side ("laid out") for clarity: in reality, the input shaft 29 is located vertically above the main shaft 30. The propeller shaft 32 is connected to the front wheels via a front differential 16 and to the rear wheels via a rear mounted differential/torque splitter 20.

In use, the engine 1 drives the first and second transfer gears 5a,5b through the clutch 4. Drive is transferred rearwards and inwards by the transfer gears 5a,5b and the transverse transfer shaft 26, is re-directed to a longitudinal direction by the bevel gears 27a,27b and is transferred rearwards by the longitudinal transfer shaft 28 into the lay shaft 29 of the gearbox 2. Drive is then transferred via the main gearbox shaft 30 and the propeller shaft 32 into the front and rear differentials (only the front differential 16 being shown).

It can be seen in Fig. 2 that the engine 1 is mounted transversely whereas the gearbox 2 is mounted longitudinally, i.e. parallel to the fore-aft axis of the vehicle. Drive is transferred from the transverse engine 1 to the longitudinal gearbox 2 by means of the transfer unit 3, comprising the clutch 4, the offset spur gears 5A,5B, the transverse transfer shaft 26, the bevel gears 27a,27b and the longitudinal transfer shaft 28. The drive through the transfer unit 3 follows a path that resembles the letter G, giving rise to the expression "G-drive".

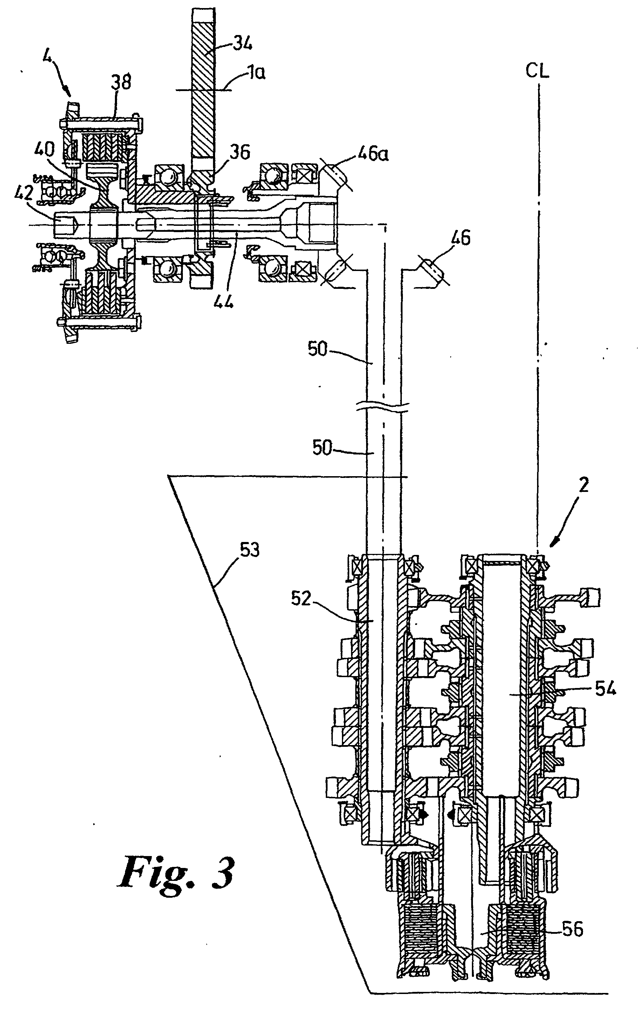

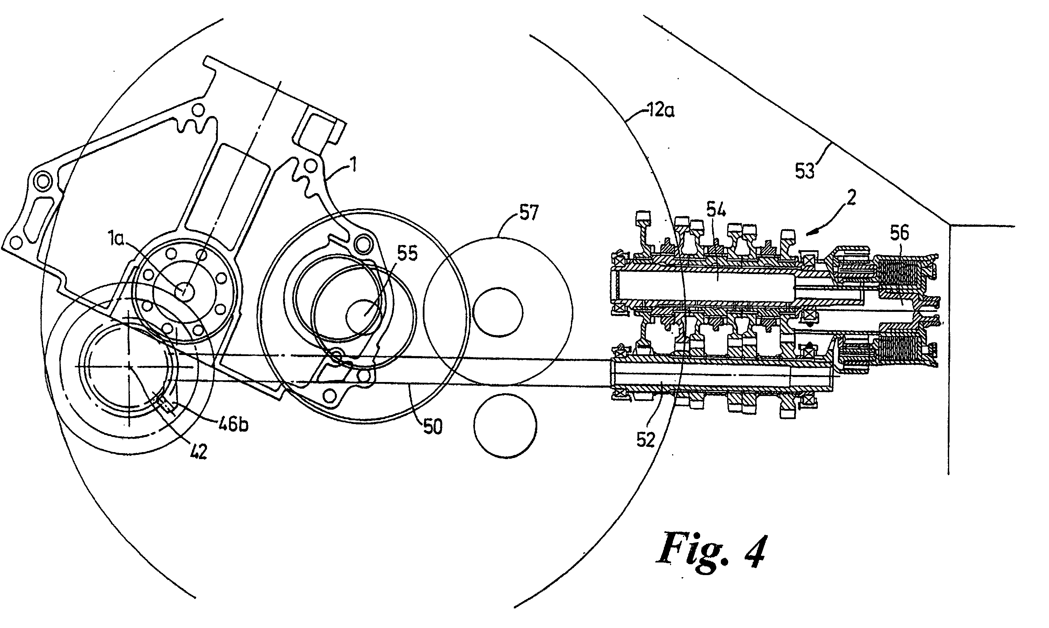

An alternative layout for the power train assembly is shown in Figs. 3 and 4. In this arrangement, the crankshaft (represented by the line 1a) is connected to a first spur gear 34 that engages a second, smaller spur gear 36, which serves as a step-up gear to increase the rotational speed and therefore decrease the torque transferred by the transmission. The second step-up gear 36 is connected to the clutch cage 38 and the clutch plate 40 is connected via the clutch shaft 42 to a transverse transfer shaft 44 that extends inwards towards the vehicle centre line CL. It should be noted that for clarity, the gears 34,36 and the clutch shaft 42 are shown laid out in Fig. 3, with the crankshaft 1a in front of the clutch shaft 42. In fact, the crankshaft 1a is located above and behind the clutch shaft 42, as shown in Fig. 4.

The inner end of the transverse transfer shaft 44 is connected to the first of a pair of bevel gears 46a,46b that re-direct the drive into a longitudinal transfer shaft 50, which is connected to the lay shaft 52 of the gearbox 2, mounted longitudinally in the transmission tunnel 53. For clarity, the gearbox 2 is shown in a side view, allowing the lay shaft 52, the main shaft 54 and the propeller shaft 56 to be seen. The front wheels 12a, which rotate about an axis 55, are driven from the propeller shaft 56 via a step-down gear 57 that decreases the rotational speed of the transmission and increase the torque transferred to the wheels.

In use, drive from the second step-up gear 36 is transferred through the clutch 4 into the transverse transfer shaft 44, which extends inwards towards the vehicle centre line CL. Drive is then transferred via the bevel gears 46a,46b into the longitudinal transfer shaft 50, which transmits the drive into the lay shaft 52 of the gearbox 2.

It will be noted that in this arrangement, the clutch 4 is mounted outwards of the step-up gears 34,36 and the transverse transfer shaft 44, in a position where it can be removed easily without having to remove either the engine or the gearbox. This allows the clutch 4 to be replaced very easily when necessary.

The step-up gears 34,36 reduce the torque transferred through the clutch 4, the transfer shafts 44,50 and the bevel gears 46a,46b, allowing smaller, lighter components to be used.

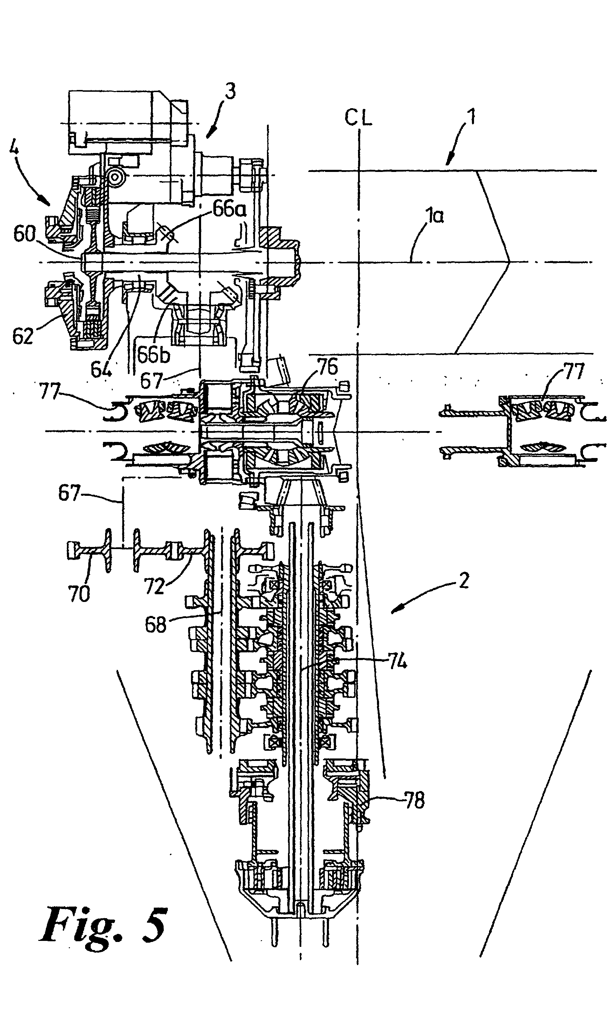

Yet another embodiment is shown in Fig. 5, in which the clutch shaft 60 is connected to the crankshaft, which is represented by the broken line 1a. The clutch housing 62 is connected by means of a rotatable sleeve 64 mounted on the clutch shaft 60 to the first of a pair of bevel gears 66a,66b. A longitudinal transfer shaft represented by the broken line 67 connects the second bevel gear 66b to the layshaft 68 of the gearbox 2 via a pair of offset spur gears 70,72 that transfer the drive inwards, towards the centre line of the vehicle CL. The gearbox 2 is again shown laid out, which is why the broken line representing the longitudinal transfer shaft 67 is not straight. The main gearbox shaft 74 is connected to the front wheels through a combination differential 76 and a pair of constant velocity joints 77, and to the rear front wheels through a torque splitter/clutch pack 78.

In this arrangement the clutch 4 is again mounted in a position where it can be removed quickly and easily without removing either the engine 1 or the gearbox 2.

## Claims

1. A power train assembly for a vehicle including a transversely mounted motor (1), a longitudinally mounted gearbox (2) and a drive transfer unit (3) for transferring drive from the motor to the gearbox, the drive transfer unit being connected to a first end of the engine crankshaft and including transverse transfer means (6) for transferring drive transversely inwards from the first end of the engine crankshaft towards the centre line of the vehicle and re-direction means (7) for re-directing the drive from the transverse direction of the engine to the longitudinal direction of the gearbox; **characterised in that** the transverse transfer means (6) is constructed and arranged to transfer the drive transversely inwards from the first end of the engine crankshaft towards a second end of the crankshaft, opposite the first end thereof.

2. A power train assembly according to claim 1, wherein the transverse transfer means includes a transverse transfer shaft (6).

3. A power train assembly according to claim 1 or claim 2, wherein the transverse transfer means includes a transverse transfer sleeve (64).

4. A power train assembly according to any one of claims 1 to 3, wherein the transverse transfer means includes at least one transverse transfer gear (70,72).

5. A power train assembly according to any one of the preceding claims, wherein the re-direction means (7) includes a pair of bevel gears.

6. A power train assembly according to any one of the preceding claims, including longitudinal transfer means (9) for transferring drive longitudinally rearwards from the engine to the gearbox.

7. A power train assembly according to claim 6, wherein the longitudinal transfer means (9) includes a longitudinal transfer shaft.

8. A power train assembly according to any one of claims 1 to 3, wherein the longitudinal transfer means includes at least one longitudinal transfer gear (5a,5b).

9. A power train assembly according to any one of the preceding claims, wherein the drive transfer unit includes a clutch (4).

10. A power train assembly according to claim 9, wherein the clutch (4) includes drive input means and drive output means, said drive input means and drive output means being provided on the same side of the clutch.

11. A power train assembly according to any one of the preceding claims, wherein the vehicle is a four-wheel drive car.

12. A power train assembly according to any one of the preceding claims; **characterised in that** the motor (1) is constructed and arranged to be mounted across the longitudinal axis of the vehicle with the first and second ends of the crankshaft on opposite sides of the longitudinal axis.

13. A power train assembly according to any one of the preceding claims; **characterised in that** the gearbox (2) is constructed and arranged to be mounted substantially on the longitudinal axis of the vehicle.

## Patentansprüche

1. Antriebsstrangvorrichtung für ein Fahrzeug umfassend einen quer eingebauten Motor (1), ein längs eingebautes Getriebe (2) und eine kraftübertragende Einheit (3) zur Kraftübertragung vom Motor zum Getriebe, wobei die kraftübertragende Einheit mit einem ersten Ende der Kurbelwelle des Motors verbunden ist und Querübertragungsmittel (6) zum quergerichteten Kraftübertragen vom ersten Ende der Kurbelwelle des Motors in Richtung auf die Mittellinie des Fahrzeugs und Umleitungsmittel (7) zum Umleiten der Kraft von der quergerichteten Richtung des Motors in die längsgerichtete Ausrichtung des Getriebes aufweist, **dadurch gekennzeichnet, daß** die Querübertragungsmittel (6) derart ausgebildet und angeordnet sind, daß sie die Kraft quergerichtet vom ersten Ende der Kurbelwelle des Motors nach innen in Richtung auf das zweite, dem ersten Ende gegenüberliegende Ende der Kurbelwelle übertragen.

2. Anstriebsstrangvorrichtung nach Anspruch 1, bei der die Querübertragungsmittel eine Querübertragungswelle (6) enthalten.

3. Antriebsstrangvorrichtung nach Anspruch 1 oder 2, bei der die Querübertragungsmittel eine Querübertragungsbüchse (64) enthalten.

4. Antriebsstrangvorrichtung nach einem der Ansprüche 1 bis 3, bei der die Querübertragungsmittel mindestens ein Quertransferzahnrad (70, 72) enthalten.

5. Antriebsstrangvorrichtung nach einem der voranstehenden Ansprüche, bei der die Umleitungsmittel (7) ein Paar von Kegelrädern enthalten.

6. Antriebsstrangvorrichtung nach einem der voranstehenden Ansprüchen, die längsgerichtete Übertragungsmittel (9) zum längsgerichteten Kraftübertragen vom Motor rückwärts zum Getriebe.

7. Antriebsstrangvorrichtung nach Anspruch 6, **dadurch gekennzeichnet, daß** die längsgerichteten Übertragungsmittel (9) eine längsgerichtete Übertragungswelle enthalten.

8. Antriebsstrangvorrichtung nach einem der Ansprüche 1 bis 3, bei der die längsgerichteten Übertragungsmittel zumindest ein längsgerichtetes Übertragungszahnrad (5a, 5b) enthalten.

9. Antriebsstrangvorrichtung nach einem der voranstehenden Ansprüche, bei der die kraftübertragende Einheit eine Kupplung (4) enthält.

10. Antriebsstrangvorrichtung nach Anspruch 9, bei der die Kupplung (4) Antriebs-Eingangsmittel und Antriebs-Ausgangsmittel enthält, wobei die Antriebs-Eingangsmittel und die Antriebs-Ausgangsmittel auf der selben Seite der Kupplung vorgesehen sind.

11. Antriebsstrangvorrichtung nach einem der voranstehenden Ansprüche, bei der das Fahrzeug ein vierrad-angetriebenes Fahrzeug ist.

12. Antriebsstrangvorrichtung nach einem der voranstehenden Ansprüche, **dadurch gekennzeichnet, daß** der Motor (1) derart ausgebildet und angeordnet ist, um die Längsachse des Fahrzeugs querend, mit dem ersten und zweiten Ende der Kurbelwelle auf gegenüberliegenden Seiten der Längsachse angebracht zu werden.

13. Antriebsstrangvorrichtung nach einem voranstehenden Ansprüchen, **dadurch gekennzeichnet, daß** das Getriebe (2) derart ausgebildet und angeordnet ist, um im wesentlichen auf der Längsachse der Fahrzeugs angebracht zu werden.

## Revendications

1. Ensemble de transmission pour un véhicule comprenant un moteur monté de façon transversale (1), une boîte de vitesses montée de façon longitudinale (2), et une unité de transfert d'entraînement (3) pour transférer l'entraînement du moteur vers la boîte de vitesses, l'unité de transfert d'entraînement étant reliée à une première extrémité du vilebrequin du moteur et comprenant des moyens de transfert transversaux (6) pour transférer l'entraînement de façon transversale vers l'intérieur à partir de la première extrémité du vilebrequin du moteur vers la ligne centrale du véhicule et des moyens de redirection (7) pour rediriger l'entraînement à partir de la direction transversale du moteur à la direction longitudinale de la boîte de vitesses ; **caractérisé en ce que** les moyens de transfert transversaux (6) sont construits et agencés pour transférer l'entraînement de façon transversale vers l'intérieur à partir de la première extrémité du vilebrequin du moteur vers une seconde extrémité du vilebrequin, opposée à la première extrémité de celui-ci.

2. Ensemble de transmission selon la revendication 1, dans lequel les moyens de transfert transversaux comprennent un arbre de transfert transversal (6).

3. Ensemble de transmission selon la revendication 1 ou la revendication 2, dans lequel les moyens de transfert transversaux comprennent un manchon de transfert transversal (64).

4. Ensemble de transmission selon l'une quelconque des revendications 1 à 3, dans lequel les moyens de transfert transversaux comprennent au moins un engrenage de transfert transversal (70, 72).

5. Ensemble de transmission selon l'une quelconque des revendications précédentes, dans lequel les moyens de redirection (7) comprennent une paire d'engrenages coniques.

6. Ensemble de transmission selon l'une quelconque des revendications précédentes, comprenant des moyens de transfert longitudinaux (9) pour transférer l'entraînement de façon longitudinale vers l'arrière du moteur vers la boîte à vitesses.

7. Ensemble de transmission selon la revendication 6, dans lequel les moyens de transfert longitudinaux (9) comprennent un arbre de transfert longitudinal.

8. Ensemble de transmission selon l'une quelconque des revendications 1 à 3, dans lequel les moyens de transfert longitudinaux comprennent au moins un engrenage de transfert longitudinal (5a, 5b).

9. Ensemble de transmission selon l'une quelconque des revendications précédentes, dans lequel l'unité de transfert d'entraînement comprend un embrayage (4).

10. Ensemble de transmission selon la revendication 9, dans lequel l'embrayage (4) comprend des moyens d'entrée d'entraînement et des moyens de sortie d'entraînement, lesdits moyens d'entrée d'entraînement et lesdits moyens de sortie d'entraînement étant prévus du même côté de l'embrayage.

11. Ensemble de transmission selon l'une quelconque des revendications précédentes, dans lequel le véhicule est un véhicule automobile à quatre roues motrices.

12. Ensemble de transmission selon l'une quelconque des revendications précédentes, **caractérisé en ce que** le moteur (1) est construit et agencé pour être monté en travers de l'axe longitudinal du véhicule avec les première et seconde extrémités du vilebrequin sur les côtés opposés de l'axe longitudinal.

13. Ensemble de transmission selon l'une quelconque des revendications précédentes, **caractérisé en ce que** la boîte de vitesses (2) est construite et agencée pour être montée sensiblement sur l'axe longitudinal du véhicule.
